# EUROPÄISCHE PATENTANMELDUNG

(11) **EP 2 168 872 A2**
(43) Veröffentlichungstag der Anmeldung: **31.03.2010**
(21) Anmeldenummer: 09167528.0
(22) Anmeldetag: 10.08.2009
(51) Int. Cl.: B64F 1/00, B64F 1/20

(54) **Vorrichtung zur Flugfeldbefeuerung eines Flughafens**

(30) Priorität: 30.09.2008 DE 102008049553
(71) Anmelder: ADB Airfield Solutions GmbH & Co. KG, 90439 Nürnberg (DE)
(72) Erfinder: Kamm, Thomas, 91077 Neunkirchen/Brand (DE)
(74) Vertreter: Maier, Daniel Oliver

(57) **Zusammenfassung**

Die Erfindung bezieht sich auf eine Vorrichtung zur Flugfeldbefeuerung eines Flughafens, insbesondere zur Befeuerung und/oder Markierung von Start- und Landebahnen sowie von Rollwegen für Flugzeuge, umfassend wenigstens eine erste und zweite Befeuerungseinheit (10, 10') mit jeweils einer wenigstens eine Leuchtdiode aufweisenden Lichtquelle (11) zur Aussendung von Licht (Lₒᵤₜ). Indem die Befeuerungseinheiten (10, 10') jeweils eine Messeinrichtung (16) zur Erfassung von außen einfallenden Lichts (Lᵢₙ) aufweist, wobei die Messeinrichtung (16') der zweiten Befeuerungseinheit (10') derart ausgebildet ist, dass sie von der Lichtquelle (11) der ersten Befeuerungseinheit (10) ausgesandtes Licht (Lₒᵤₜ) erfasst, können die Befeuerungseinheiten (10, 10') auch bei Verwendung von Leuchtdioden als Lichtquellen (11) automatisch auf ihre tatsächliche Lichtaussendung überwacht werden.

## Beschreibung

Die Erfindung betrifft eine Vorrichtung zur Flugfeldbefeuerung eines Flughafens, insbesondere zur Befeuerung und/oder Markierung von Start- und Landebahnen sowie von Rollwegen für Flugzeuge, umfassend wenigstens eine erste und zweite Befeuerungseinheit mit jeweils einer wenigstens eine Leuchtdiode aufweisende Lichtquelle zur Aussendung von Licht.

Befeuerungsvorrichtungen auf Flughäfen dienen der Orientierung von Flugzeugführern, insbesondere auch bei schlechten Sichtverhältnissen, deren Flugzeug sich im Anflug auf die Landebahn befindet oder sich auf Rollwegen zwischen Start- bzw. Landebahn und seiner Parkposition bewegt. Als Befeuerungseinheiten sind beispielsweise Anflug-, Schwellen-, Pisten-, Rollweg- und Vorfeldfeuer bekannt, die als Überflur- oder überrollbares Unterflurfeuer ausgebildet sein können. Die Befeuerungseinheiten sind in Serienstrom- oder Parallelkreisen zu Befeuerungsvorrichtungen geschaltet, die von Konstantstromreglern beziehungsweise Konstantspannungsquellen versorgt werden. Internationale Normen, etwa Anhang 14 der ICAO (kurz für International Civil Aviation Organization), schreiben für die einzelnen Arten von Befeuerungseinrichtungen photometrische Werte für den tatsächlichen Lichtaustritt vor, die bei der Herstellung der Befeuerungseinheit einzuhalten sind. Es handelt sich dabei um die Farbe und die Lichtverteilung, die auf einer Projektionsfläche geprüft werden. Aber auch während des Betriebes sind Befeuerungseinheiten ständig auf ihre Funktion hinsichtlich des Lichtaustrittes zu überwachen.

Im eingebauten Zustand einer Befeuerungseinheit kann die aktuelle Lichtverteilung durch mobile Messeinrichtungen überprüft werden. Dabei muss jedoch eine technisch bedingte, geringere Genauigkeit und Reproduzierbarkeit der Lichtaustritts- und -verteilungsmessung im Vergleich zur Labormessung in Kauf genommen werden. Während des operationellen Flugbetriebs beschränkt sich die Funktionsprüfung auf die unmittelbare optische Kontrolle durch Wartungspersonal in Betriebspausen oder auf die indirekte Bestimmung des Lichtaustritts, indem der Stromfluss durch die Befeuerungseinheit überwacht wird. Bei den üblicherweise eingesetzten Halogen-Lichtquellen wird aus einem erkannten Stromfluss die Schlussfolgerung gezogen, dass die Wendel des Leuchtmittels intakt ist. Dies erlaubt jedoch keine Aussage über die tatsächliche Lichtaussendung aus den Befeuerungseinheiten. In Ausnahmefällen können Leitungskurzschlüsse zum gleichen Messergebnis führen, wie der Stromfluss durch eine intakte Lichtquelle, und damit zu einer falschen Schlussfolgerung. Verschmutzungen oder Trübungen von Optikeinrichtungen können die Lichtaussendung beeinflussen, ohne dass dies durch die genannte Messung elektrischer Kenngrößen erfasst wird. Regelmäßige Begehungen vor Ort beziehungsweise Überflüge über die Anflugbefeuerung erlauben eine grobe Funktionsprüfung auch schwer erreichbarer Befeuerungseinheiten mittels Inaugenscheinnahme durch Wartungspersonal.

Der Einsatz von Leuchtdioden als Lichtquelle von Befeuerungseinheiten bietet erhebliche Vorteile gegenüber konventionellen Halogen-Lichtquellen, wie etwa eine längere Lebensdauer, ein geringerer Wartungsaufwand, eine hohe Farbtreue, eine Regelbarkeit von Helligkeit und Farbe durch Kombination verschiedenfarbiger Leuchtdioden, sowie eine Energieersparnis durch einen hohen Wirkungsgrad. Zur Überwachung der tatsächlichen Lichtaussendung von Befeuerungseinheiten mit Leuchtdioden können jedoch weder die indirekten Messmethoden elektrischer Kenngrößen eingesetzt werden, da die Strom-Spannungs-Charakteristik von Leuchtdioden dies praktisch nicht zulässt, noch die auf klassische Halogen-Lichtquellen mit ihrem breiten Emissionsspektrum ausgelegten, mobilen Messeinrichtungen, da Leuchtdioden einen hohen Anteil monochromatischen Lichts aufweisen.

Der Erfindung liegt daher die Aufgabe zugrunde, eine Befeuerungsvorrichtung der eingangs genannten Art bereitzustellen, deren Befeuerungseinheiten auch bei Verwendung von Leuchtdioden als Lichtquellen automatisch auf ihre tatsächliche Lichtaussendung überwacht werden können.

Die Aufgabe wird gelöst durch eine gattungsgemäße Befeuerungsvorrichtung, bei welcher die Befeuerungseinheiten jeweils eine Messeinrichtung zur Erfassung von außen einfallenden Lichts aufweist, wobei die Messeinrichtung der zweiten Befeuerungseinheit derart ausgebildet ist, dass sie von der Lichtquelle der ersten Befeuerungseinheit ausgesandtes Licht erfasst. Indem die Messeinrichtung für von einer ersten Befeuerungseinheit ausgesandtes Licht außerhalb dieser Befeuerungseinheit angeordnet ist, wird durch die Messeinrichtung der tatsächliche Lichtaustritt aus der Befeuerungseinheit - also der Anteil des Lichts, der von der Lichtquelle erzeugt wird, der dann gegebenenfalls optische Komponenten der ersten Befeuerungseinheit durchläuft, und der schließlich nach Verlassen der ersten Befeuerungseinheit am Ort der Messeinrichtung eintrifft und von dieser empfangen wird - gemessen. Der Ort der Messeinrichtung ist derjenige der zweiten, beispielsweise benachbarten Befeuerungseinheit. Auf diese Weise kann durch eine Vielzahl an baugleichen Befeuerungseinheiten mit integrierter Messeinrichtung eine Befeuerungsvorrichtung installiert werden, die eine Kette von sich gegenseitig überwachenden Befeuerungseinheiten aufweist. Die Überwachung der tatsächlichen Lichtaussendung erfolgt dabei automatisch, also ohne das Erfordernis von am Ort der Befeuerungseinheit arbeitendem Wartungspersonal und ohne den Einsatz zusätzlicher mobiler Messgeräte.

In einer bevorzugten Ausführungsform der erfindungsgemäßen Befeuerungsvorrichtung weist die Messeinrichtung einen Lichtsensor zur Ermittlung von Intensität und/oder Farbe des einfallenden Lichts auf, welcher eine Optikvorrichtung zur Bündelung und/oder Filterung des von außen einfallenden Lichts vorgeschaltet ist. Der Lichtsensor kann als Fotodiode, Fotowiderstand, Fotozelle oder dergleichen ausgebildet sein und ist auf die Wellenlängen des zu messenden Lichts, welches von der Leuchtdiode der ersten Befeuerungseinheit ausgesandt wird, eingestellt. Die Optikvorrichtung bündelt das empfangene Licht, damit ein Messsignal mit ausreichender Intensität erzeugt wird; ferner filtert sie das empfangene Licht, damit möglichst wenig Fremdlicht auf den Lichtsensor fällt.

In einer vorteilhaften Ausgestaltung der erfindungsgemäßen Befeuerungsvorrichtung weist die Lichtquelle eine Gruppe von ein- oder verschiedenfarbigen Leuchtdioden auf. Hierdurch kann Licht unterschiedlicher Helligkeit und/oder Farbe erzeugt werden. Mit einer Gruppe von einfarbigen Leuchtdioden wird der Lichtquelle eine Redundanz verliehen, so dass bei Ausfall einzelner Leuchtdioden nicht notwendigerweise ein Wechsel der Lichtquelle oder der Befeuerungseinheit erfolgen muss, da der Ausfall durch Nachregelung der Helligkeit der noch intakten Leuchtdioden kompensiert werden kann. Mit einer Gruppe verschiedenfarbiger Leuchtdioden lässt sich durch gezieltes Ansteuern der Leuchtdioden unterschiedlich farbiges Licht der Befeuerungseinheit mischen. Es wird also die Wartungsfreundlichkeit von Befeuerungsvorrichtungen erhöht und die Typenvielfalt der Befeuerungseinheiten verringert.

In einer vorteilhaften Ausführungsform der erfindungsgemäßen Befeuerungsvorrichtung weisen die Befeuerungseinheiten jeweils eine Optikeinrichtung zur Strahlformung des von der Lichtquelle ausgesandten Lichts auf. Das von der Lichtquelle erzeugte Licht tritt durch eine Optikeinrichtung, welche Linsen, Spiegel und Prismen umfassen kann, um zu einem Strahl mit durch Normen vorgegebenen Eigenschaften hinsichtlich seiner raumwinkelbezogenen Intensitätsverteilung geformt zu werden.

In einer bevorzugten Ausgestaltung der erfindungsgemäßen Befeuerungsvorrichtung weisen die Befeuerungseinheiten jeweils eine Regeleinrichtung mit einem Lichtsensor zur Erfassung von Intensität und/oder Farbe des von ihrer Lichtquelle ausgesandten Lichts und mit einer mit diesem verbundenen Steuereinheit zur Ansteuerung der Lichtquelle auf. Dieser interne fotometrische Sensor misst das Licht unmittelbar nach seiner Erzeugung durch die Leuchtdioden hinsichtlich seiner Farbe und Helligkeit, also bevor das Licht die Befeuerungseinheit verlässt und gegebenenfalls bevor das Licht die Optikeinrichtung passiert. Zum einen entsteht hierdurch eine zusätzliche Überwachungsmöglichkeit für das auszusendende Licht, zum anderen werden die Messwerte der Regeleinrichtung zugeführt, in welcher nach einem Soll-Ist-Vergleich über die Steuereinrichtung die Bestromung der Leuchtdioden zur Regulierung von Helligkeit und Farbe angesteuert werden kann.

In einer weiteren vorteilhaften Ausführungsform der erfindungsgemäßen Befeuerungsvorrichtung weisen die Befeuerungseinheiten jeweils eine Versorgungseinheit auf, die zur Energieversorgung über eine Leitung mit einer zentralen Energieversorgungseinrichtung verbunden sind. Die Versorgungseinheiten dienen der Spannungsversorgung der jeweiligen Befeuerungseinheit und sind über eine Zweidrahtleitung an eine zentrale Energieversorgungseinrichtung gekoppelt.

In einer weiteren bevorzugten Ausgestaltung der erfindungsgemäßen Befeuerungsvorrichtung weisen die Befeuerungseinheiten jeweils eine Kommunikationseinheit auf, die zur Datenübertragung mit einer zentralen Kommunikationseinrichtung verbunden sind. Über die Kommunikationseinheiten in den Befeuerungseinheiten werden die Messwerte der Messeinrichtungen und der Regeleinrichtungen an die zentrale Kommunikationseinrichtung übertragen. Damit können zentral zwei unterschiedliche Messwerte über das ausgesandte Licht einer Befeuerungseinheit miteinander und mit einem abgeglichenen Betriebzustand verglichen werden. Dies erlaubt Fehlfunktionen im Lichtaustritt durch Defekte oder Verschmutzungen automatisch unter Identifikation von Nummer und Einbauort der betreffenden Befeuerungseinheit zu erfassen. In der zentralen Kommunikationseinrichtung kann zu Wartungszwecken eine entsprechende Zustandsmeldung generiert werden. Da die Kommunikation bidirektional ausgebildet ist, können von der zentralen Kommunikationseinrichtung umgekehrt Kommandos zum Ein- oder Ausschalten oder zur Helligkeits- oder Farbeinstellung an die Befeuerungseinheiten übertragen werden.

Vorzugsweise sind die Kommunikationseinheiten der erfindungsgemäßen Befeuerungsvorrichtung mit der zentralen Kommunikationseinrichtung über die Energieversorgungsleitung zur Ausbildung eines Feldbusses für die Datenübertragung verbunden. Wenn über die Zweidrahtleitung, die zur Übertragung von elektrischer Energie an die Befeuerungseinheiten verwendet wird, auch hochfrequente Datensignale übertragen werden, können für die Datenkommunikation Leitungslängen von mindestens bis zu 10 km bei bis zu 200 angeschlossenen Befeuerungseinheiten verwirklicht werden. Dabei überschreitet die speisende Spannung einschließlich kurzzeitiger Spannungsspitzen nicht 600 V. Dies ermöglicht die Verwendung von Niederspannungskabeln der Klasse unter 1000 V. Der Einsatz von Niederspannungsleitungen und -bauelementen hat erhebliche Sicherheits- und Kostenvorteile gegenüber den bekannten Hochspannungskabeln mit Betriebsspannungen bis 5000 V mit Prüfspannungen bis zu 20 kV. Außerdem überschreitet die Leistungsfähigkeit der als Feldbus in Zweidrahttechnik ausgebildeten Leitung die Kommunikation auf Serienstromkreisen, welche eine Baudrate von maximal 100 kb/sec aufweist, bei weitem.

In einer weiteren bevorzugten Ausführungsform der erfindungsgemäßen Befeuerungsvorrichtung sind die Lichtquellen jeweils zur kontinuierlichen oder intermittierender Aussendung von Licht und die Messeinrichtungen zur dessen Erfassung ausgebildet. Damit sind als Befeuerungseinrichtungen sowohl stetig brennende Feuer in Unterflur- oder Überflurbauweise als auch Blitzfeuer in traditioneller Hochspannungstechnik, wobei die Lichtsensoren an die relevanten Wellenlängen des ausgesandten Lichts anzupassen sind, sowie auch in Leuchtdiodentechnik verwendbar.

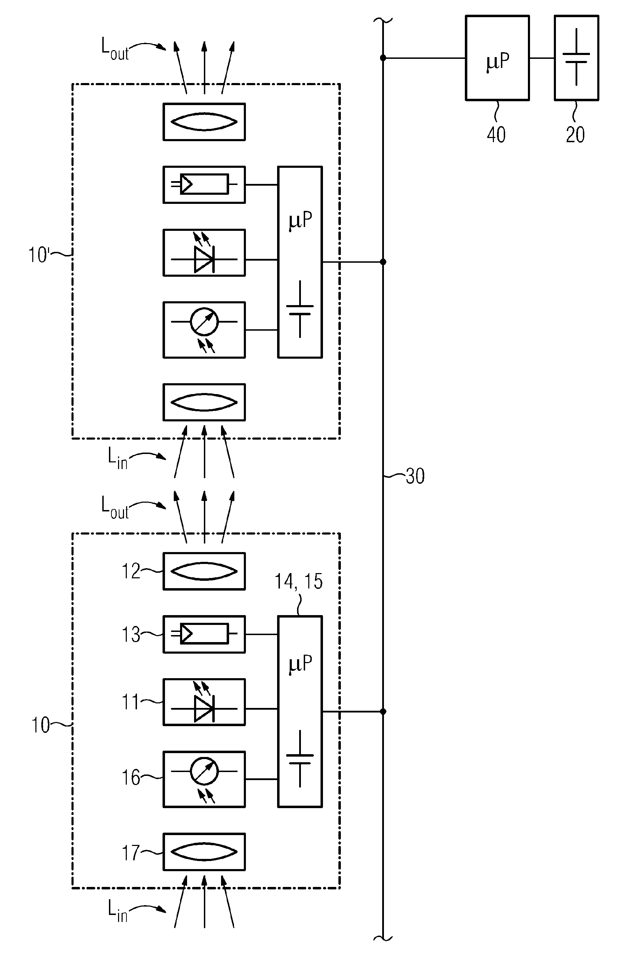

Weitere Eigenschaften und Vorteile der Erfindung ergeben sich aus den nachfolgenden Erläuterungen zur Zeichnung, in deren einziger Figur ein Ausführungsbeispiel einer erfindungsgemäßen Befeuerungsvorrichtung schematisch dargestellt ist.

Gemäß der einzigen Figur umfasst eine Vorrichtung zur Flugfeldbefeuerung eines Flughafens, beispielsweise die Mittellinienfeuer einer Landebahn, eine Vielzahl von hintereinander angeordneten Befeuerungseinheiten, von denen eine erste Befeuerungseinheit 10 und eine zweite, baugleiche Befeuerungseinheit 10' dargestellt und die als von Flugzeugen überrollbare Unterflurfeuer ausgebildet sind.

Jede Befeuerungseinheit 10 bzw. 10' weist ein nicht dargestelltes, topfförmiges Gehäuse auf, welches mittig in eine in der Landebahn vorgesehene Vertiefung eingelassen und auf Flurniveau durch einen Deckel druckdicht verschlossen ist. Im Gehäuse ist eine Leuchtdioden aufweisende Lichtquelle 11 angeordnet, die Licht einer vorgegebenen Farbe und Helligkeit aussendet. Das von der Lichtquelle 11 emittierte Licht durchläuft eine Optikeinrichtung 12, die beispielsweise ein Prisma aufweist, an dessen Basis das von der Lichtquelle emittierte Licht eintritt und durch dessen Vorderseite das Licht Lₒᵤₜ zu einem Strahl mit definierter, raumwinkelbezogener Intensitätsverteilung austritt. Das Licht Lₒᵤₜ wird unter einem flachen Winkel gegen die Horizontale ausgesandt, um einem im Landeanflug befindlichen oder rollenden Piloten die Mittellinie der Landebahn auch bei schlechten Sichtverhältnissen, insbesondere bei Nacht, zu dessen Orientierung zu markieren. Die Farbe und die Helligkeit des von den Leuchtdioden ausgesandten Lichts wird mittels eines fotometrischen Sensorelementes einer im Gehäuse angeordneten Regeleinrichtung 13 gemessen und kann bei Bedarf, das heißt bei Abweichung von einem Sollbetriebszustand, mittels einer zur Regeleinrichtung 13 gehörenden Steuereinrichtung nachgeregelt werden. Durch die Regelung können einzelne Leuchtdioden, deren ursprüngliche lichttechnische Eigenschaften sich durch den Betreib geändert haben, über geeignete Pulsweitenmodulation der Bestromung der intakten Leuchtdioden kompensiert werden. Bei einer Gruppe verschiedenfarbiger Leuchtdioden kann mittels der Regeleinrichtung 13 durch Mischung die Farbe des ausgesandten Lichts Lₒᵤₜ eingestellt werden. Die elektrischen Verbraucher der Befeuerungseinheiten 10 bzw. 10' werden durch Versorgungseinheiten 14 mit Strom versorgt, die über eine Leitung 30 zur Übertragung elektrischer Energie mit einer zentralen Energieversorgungseinrichtung 20 verbunden sind. Ferner umfassen die Befeuerungseinheiten 10 bzw. 10' Kommunikationseinheiten 15, die zur bidirektionalen Datenübertragung an eine zentrale Kommunikationseinrichtung 40 gekoppelt sind.

Erfindungsgemäß weist nun jede Befeuerungseinheit 10 bzw. 10' eine Messeinrichtung 16 mit einem fotometrischen Sensorelement zur Messung von außen einfallenden Lichts Lᵢₙ auf. Mit der Messeinrichtung 16 lassen sich die spektrale Verteilung und die Intensität des einfallenden Lichts Lᵢₙ bestimmen. Hierzu ist der Messeinrichtung 16 eine Optikvorrichtung 17 vorgeschaltet. Die Mess- und Optikeinrichtung der zweiten Befeuerungseinheit 10' sind nun derart ausgebildet, dass sie bei den durch internationale Standards vorgegebenen Abständen und Ausrichtungen der zweiten 10' relativ zur ersten Befeuerungseinheit 10 Licht Lₒᵤₜ empfangen, welches von der Lichtquelle 11 der ersten Befeuerungseinheit 10 ausgesandt wurde. Damit ein ausreichend starkes Signal generiert wird, weist die Optikvorrichtung 17 eine Linse zur Bündelung des empfangenen Lichts Lᵢₙ auf; ferner umfasst sie ein Filter zur Unterdrückung von Fremdlicht. Die Sensitivität des Fotosensors ist dabei auf die Wellenlänge des von der oder den Leuchtdioden der ersten Befeuerungseinheit 10 ausgesandten Lichts Lₒᵤₜ abgestimmt. Damit ist eine Befeuerungsvorrichtung geschaffen, deren Befeuerungseinheiten 10 bzw. 10' sich zum einen jede für sich intern über den Fotosensor der eigenen Regeleinrichtung 13 und zum andern gegenseitig über die externe Messeinrichtung 16 der nächsten benachbarten Befeuerungseinheit 10' auf ihren tatsächlichen Lichtaustritt Lₒᵤₜ automatisch überwachen.

Ein besonderer Aspekt der Erfindung besteht in der Verwendung der Energieversorgungsleitung 30 zur Datenübertragung zwischen den Kommunikationseinheiten 15 und der zentralen Kommunikationseinrichtung 40. Über die als Feldbus ausgeprägte Zweidrahtleitung 30 werden hochfrequente Signale zur Kommunikation übertragen. Hierdurch sind Leitungslängen von bis zu 10 km bei einer Anzahl von bis zu 200 angeschlossenen Befeuerungseinheiten 10 bzw. 10' möglich, wobei die speisende Spannung einschließlich kurzzeitiger operativer Spannungsspitzen 600 V nicht überschreitet. Mithin finden Kabel der Klasse unter 1000 V Verwendung, also Niederspannungskabel und Bauelemente in Niederspannungstechnik, was erhebliche Sicherheits- und Kostenvorteile gegenüber den sonst verwendeten Hochspannungskabeln und Betriebsspannungen von bis zu 5000 V mit Prüfspannungen über 20 kV hat. Außerdem überschreitet die Leistungsfähigkeit der als Feldbus ausgebildeten Leitungsverbindung die bekannten Kommunikationen auf Serienstromkreisen mit einer Baudrate von 100 kb/sec bei weitem. Die bidirektionale Kommunikation ermöglicht die lokale Steuerung, Überwachung und den Signalaustausch zwischen den Befeuerungseinheiten 10 bzw. 10'. Im Falle von Abweichungen der Messergebnisse gegenüber einem abgeglichenen Betriebszustand können somit Fehlfunktionen, etwa durch Defekt oder Verschmutzungen, an allen den tatsächlichen Lichtaustritt bestimmenden Komponenten selbsttätig erfasst und unter Identifikation der einzelnen Befeuerungseinrichtungen 10 bzw. 10' über Nummer und Einbauort sowie der ermittelten Zustandsmeldung an die zentrale Kommunikationseinrichtung 40 übertragen werden.

Bei Befeuerungseinheiten, die Optikeinrichtungen zur Lichtabstrahlung in zwei Richtungen aufweisen, wird die sensorische Erfassung der Lichtaussendung der jeweils benachbarten Befeuerungseinheit über eine Messeinrichtung ausgeführt, die in dem der zu vermessenden Befeuerungseinheit zugewandten Prisma integriert ist.

Bei Überflurfeuern wird die sensorische Erfassung der Lichtaussendung des jeweils benachbarten, in Flugrichtung hinteren Feuers über eine Messeinrichtung ausgeführt, die in der Rückseite des in Flugrichtung vorderen Feuers integriert ist.

Die beschriebene Messeinrichtung 16 zur Erfassung des tatsächlichen Lichtaustritts kann sowohl für stetig brennende Befeuerungseinheiten in Unterflur- oder Überflurbauweise als auch für Blitzfeuer in traditioneller Hochspannungstechnik bei angepasster Sensorik für die relevanten Wellenlängen des emittierten Lichts oder auch in LED-Technik verwendet werden.

Der Vorteil der erfindungsgemäßen Systemlösung, die eine Anzahl miteinander verbundener Befeuerungseinheiten 10 bzw. 10', eine zentrale Energieversorgungs- und Kommunikationseinrichtung 20, 40 je Befeuerungskreis und eine datentechnisch bidirektionale Verbindung zur Warte und zum Bedien- und Beobachtungsplatz des Bodenlotsen aufweist, besteht in der ferngesteuerten Überwachungs- und Steuerungsmöglichkeit der gesamten Befeuerungsvorrichtung mit daraus resultierendem geringeren Wartungsaufwand, individueller Funktionsüberwachung entsprechend der ICAO-Empfehlungen und über den Lebenszyklus geringeren Betriebskosten.

## Patentansprüche

1. Vorrichtung zur Flugfeldbefeuerung eines Flughafens, insbesondere zur Befeuerung und/oder Markierung von Start- und Landebahnen sowie von Rollwegen für Flugzeuge, umfassend wenigstens eine erste und zweite Befeuerungseinheit (10, 10') mit jeweils einer wenigstens eine Leuchtdiode aufweisenden Lichtquelle (11) zur Aussendung von Licht (Lₒᵤₜ),
**dadurch gekennzeichnet, dass** die Befeuerungseinheiten (10, 10') jeweils eine Messeinrichtung (16) zur Erfassung von außen einfallenden Lichts (Lᵢₙ) aufweist,
wobei die Messeinrichtung (16') der zweiten Befeuerungseinheit (10') derart ausgebildet ist, dass sie von der Lichtquelle (11) der ersten Befeuerungseinheit (10) ausgesandtes Licht (Lₒᵤₜ) erfasst.

2. Befeuerungsvorrichtung nach Anspruch 1,
wobei die Messeinrichtung (16) einen Lichtsensor zur Ermittlung von Intensität und/oder Farbe des einfallenden Lichts (Lᵢₙ) aufweist, welcher eine Optikvorrichtung (17) zur Bündelung und/oder Filterung des von außen einfallenden Lichts (Lᵢₙ) vorgeschaltet ist.

3. Befeuerungsvorrichtung nach Anspruch 1 oder 2,
wobei die Lichtquelle (11) eine Gruppe von ein- oder verschiedenfarbigen Leuchtdioden aufweist.

4. Befeuerungsvorrichtung nach einem der Ansprüche 1 bis 3,
wobei die Befeuerungseinheiten (10, 10') jeweils eine Optikeinrichtung (12) zur Strahlformung des von der Lichtquelle (11) ausgesandten Lichts (Lₒᵤₜ) aufweisen.

5. Befeuerungsvorrichtung nach einem der Ansprüche 1 bis 4,
wobei die Befeuerungseinheiten (10, 10') jeweils eine Regeleinrichtung (13) mit einem Lichtsensor zur Erfassung von Intensität und/oder Farbe des von ihrer Lichtquelle (11) ausgesandten Lichts (Lₒᵤₜ) und mit einer mit diesem verbundenen Steuereinheit zur Ansteuerung der Lichtquelle (11) aufweist.

6. Befeuerungsvorrichtung nach einem der Ansprüche 1 bis 5,
wobei die Befeuerungseinheiten (10, 10') jeweils eine Versorgungseinheit (14) aufweisen, die zur Energieversorgung über eine Leitung (30) mit einer zentralen Energieversorgungseinrichtung (20) verbunden sind.

7. Befeuerungsvorrichtung nach einem der Ansprüche 1 bis 6,
wobei die Befeuerungseinheiten (10, 10') jeweils eine Kommunikationseinheit (15) aufweisen, die zur Datenübertragung mit einer zentralen Kommunikationseinrichtung (40) verbunden sind.

8. Befeuerungsvorrichtung nach Anspruch 6 oder 7,
wobei die Kommunikationseinheiten (15) mit der zentralen Kommunikationseinrichtung (40) über die Energieversorgungsleitung (30) zur Ausbildung eines Feldbusses für die Datenübertragung verbunden sind.

9. Befeuerungsvorrichtung nach einem der Ansprüche 1 bis 8,
wobei die Lichtquellen (11) jeweils zur kontinuierlichen oder intermittierender Aussendung von Licht (Lₒᵤₜ) und die Messeinrichtungen (16) zur dessen Erfassung ausgebildet sind.
